# FASCICULE DE BREVET EUROPEEN

(11) **EP 2 828 058 B1**
(45) Date de publication et mention de la délivrance du brevet: **02.01.2019**
(21) Numéro de dépôt: 13714580.1
(22) Date de dépôt: 22.03.2013
(51) Int. Cl.: B29C 47/10, B29C 47/92, B29C 31/04, D01G 23/04, B29C 31/06, B29K 311/10

(54) **PROCÉDÉ ET INSTALLATION DE FABRICATION EN CONTINU D'UN COMPOSITE INCLUANT UNE MATRICE POLYMÈRE ET DES FIBRES NATURELLES**
VERFAHREN UND VORRICHTUNG ZUR KONTINUIERLICHEN HERSTELLUNG EINES VERBUNDSTOFFS MIT EINER POLYMERMATRIX UND NATURFASERN
PROCESS AND EQUIPMENT FOR THE CONTINUOUS MANUFACTURE OF A COMPOSITE THAT INCLUDES A POLYMER MATRIX AND NATURAL FIBRES

(30) Priorité: 23.03.2012 FR 1252625
(43) Date de publication de la demande: 28.01.2015
(73) Titulaire: Clextral, 42700 Firminy (FR)
(72) Inventeur: SOUVETON, Gilles, F-42490 Fraisses (FR); ASENSIO, Luis, F-42600 Savigneux (FR); BRUNEL, Sylvie, F-42740 Saint Paul En Jarez (FR)
(74) Mandataire: Lavoix
(86) Numéro de dépôt international: PCT/EP2013/056135
(87) Numéro de publication internationale: WO 2013/139978

(56) Documents cités:
- WO-A1-2011/029904
- WO-A2-2006/102543
- DE-A1- 10 214 654
- GB-A- 2 229 200
- US-A1- 2005 200 050
- US-A1- 2008 213 562

## Description

La présente invention concerne un procédé et une installation de fabrication en continu d'un composite incluant une matrice en un polymère et des fibres naturelles, notamment avec une teneur en fibres naturelles supérieure à 15 % en poids du composite.

L'invention concerne ainsi la fabrication de ce qu'on peut appeler des biocomposites dans le sens où au moins la charge de la matrice polymère est constituée de fibres naturelles, autrement dit est issue de ressources renouvelables et/ou biodégradables. L'invention concerne aussi les cas où la matrice polymère est, elle-même, issue de telles ressources renouvelables et/ou biodégradables, c'est-à-dire les cas où cette matrice est réalisée en un biopolymère. Parmi ces ressources renouvelables, on peut citer les fibres de bois, les déchets agricoles, les graminées, les plantes, les composés à base d'hydrate de carbone comme les sucres, l'amidon, le mais, ainsi que les huiles végétales et les protéines.

US-A-5 663 216 propose de fabriquer un biocomposite à fibres naturelles grâce à une machine d'extrusion. Ce document évoque des prétraitements chimiques des fibres naturelles, avant les envoyer dans la machine d'extrusion pour y être mélangées avec un biopolymère.

Dans ce contexte, il est connu de chercher à introduire, dans une extrudeuse alimentée en polymère, des faisceaux de fibres naturelles, provenant directement d'une balle de récolte et de transport de ces fibres naturelles : ces faisceaux sont extraits de leur balle sous forme d'enchevêtrements et d'écheveaux de matière fibreuse, qui sont travaillés par un dispositif ad hoc permettant de contrôler le débit, volumétrique ou massique, de l'alimentation de l'extrudeuse en cette matière fibreuse. Ainsi, cette technique reprend à son compte ce qui est bien connu et maîtrisé pour l'alimentation d'une extrudeuse en des fibres de verre et des fibres non naturelles similaires, comme divulgué par exemple dans US-A-2011/002190. Cependant, en pratique, cette technique transposée aux fibres naturelles s'avère impossible à mettre en oeuvre de manière satisfaisante : l'alimentation en faisceaux extraits d'une balle est trop irrégulière, dans le sens où des noeuds, voire des boules de faisceaux sont régulièrement admis dans l'extrudeuse, qui en est alors considérablement perturbée pour mélanger de manière homogène le polymère et les fibres naturelles, l'admission de ces noeuds et boules de faisceaux étant souvent suivie d'une courte interruption de l'alimentation des fibres dans l'extrudeuse, qui s'en trouve de nouveau perturbée, bien que, en moyenne dans le temps, le débit de l'alimentation de l'extrudeuse en matière fibreuse est respecté.

Pour contourner cette problématique, DE-A-102 14 654, qui peut être considéré comme l'état de la technique le plus proche de l'objet défini par la revendication 1 annexée, propose, après avoir ouvert une balle de fibres, de séparer les fibres en les soumettant à un courant d'air, par aspiration ou par soufflage, puis de doser ces fibres après les avoir récupérées en sortie du séparateur à courant d'air. Le dosage des fibres récupérées est réalisé à l'aide d'un agitateur et de rouleaux, comme décrit dans DE-A-101 21 034 : en sortie de ce système de dosage, les fibres sont « volantes » dans le sens où elles sont suffisamment séparées les unes des autres pour être aspirées à force au moyen d'un courant d'air, jusqu'à une vis qui transporte les fibres à une extrudeuse pour y être mélangées à un polymère. En entrée de cette vis, un agitateur est prévu pour répartir le flux des fibres aspirées et empêcher la formation de pontages de fibres, comme décrit en détail dans DE-A-102 01 869. Bien que la technique de DE-A-102 14 654 semble viable, l'utilisation de courants d'air pour séparer et transporter les fibres est contraignante, limite le débit de fibres, ainsi que la précision de leur dosage, et ne permet pas une bonne individualisation des fibres.

De son côté, WO-A-20111029904 propose de broyer des fibres de bois, puis de les doser, puis de les transporter soit en l'état, par exemple à l'aide d'un transporteur à vis ou à bande de transport, soit en les compactant, par exemple à l'aide d'un transporteur à vis conique, et ce, dans tous les cas, jusqu'à un dispositif de mélange avec un autre composant, tel qu'un plastique et/ou un additif, tel qu'un promoteur d'adhésion. Le mélange obtenu est ensuite introduit dans une extrudeuse.

Une alternative aux techniques décrites ci-dessus, qui est d'ailleurs mise en oeuvre industriellement, consiste à alimenter une extrudeuse directement par des fibres naturelles qui se présentent sous une forme broyée ou, plus généralement, qui sont réduites en petits fragments : cette présentation permet de doser les fibres et de les introduire dans l'extrudeuse de manière régulière. Cependant, cette forme broyée ou, plus généralement, fragmentaire implique nécessairement que les fibres mélangées au polymère ne présentent qu'une longueur très limitée, de l'ordre du millimètre, voire moins. Or, une charge de fibres naturelles aussi courtes ne permet pas au biocomposite d'atteindre des caractéristiques mécaniques intéressantes. Ainsi, WO-A-20061102543 et US-A-2005/0200050 proposent de cisailler ou tondre (« shearing ») un amas de fibres naturelles à l'aide de couteaux rotatifs, jusqu'à réduire les fibres à des fragments individuels, qui présentent une longueur de l'ordre du millimètre et qui, de ce fait, ne posent plus de problème d'enchevêtement. Dans ces documents, les fragments de fibre sont ensuite mélangés à un liant, en ajoutant éventuellement des additifs, avant que ce mélange ne soit densifié par mise en pression, typiquement sous forme de pellets, le mélange fibreux densifié étant ensuite introduit, conjointement avec une résine polymère, dans une machine d'extrusion pour obtenir, en sortie de cette dernière, un composite.

Le but de la présente invention est d'améliorer les procédés et installations existantes, en permettant de fabriquer en continu, de manière fiable et efficace, un biocomposite à fibres naturelles présentant des caractéristiques mécaniques intéressantes.

A cet effet, l'invention a pour objet un procédé de fabrication en continu d'un composite incluant une matrice en un polymère et des fibres naturelles, tel que défini à la revendication 1.

L'invention a également pour objet une installation de fabrication en continu d'un composite incluant une matrice en un polymère et des fibres naturelles, telle que définie à la revendication 11.

Une des idées à la base de l'invention est d'intercaler, entre une machine d'extrusion aval et des moyens amont pour doser par compression l'alimentation de cette machine en matière fibreuse « brute », des moyens spécifiques pour supprimer, au moins en partie, les enchevêtrements et autres noeuds et écheveaux de cette alimentation. Pour ce faire, l'invention prévoit d'abord, de manière surprenante, de comprimer les faisceaux enchevêtrés, qui sont extraits d'une balle de fibres ou similaire, pour réaliser un dosage fiable et précis de ces faisceaux, autrement dit pour contrôler le débit de l'alimentation aval en matière fibreuse. Puis, l'invention propose de travailler mécaniquement les faisceaux enchevêtrés comprimés de cette alimentation en matière fibreuse pour les désenchevêtrer autant que possible dans le but de permettre, dans la machine d'extrusion aval, leur bon contact avec le polymère et leur bonne dispersion dans le biocomposite produit par la machine d'extrusion. Selon l'invention, l'étape et le dispositif de traitement correspondants sont prévus non pas pour modifier le débit précité, massique ou volumétrique, des faisceaux par unité de temps, mais pour changer l'arrangement relatif de ces faisceaux : après avoir agi mécaniquement sur les faisceaux pour les désenchevêtrer, par individualisation mécanique de la majorité d'entre eux, l'air libre présent entre ces faisceaux désenchevêtrés est mécaniquement réduit pour introduire dans la machine d'extrusion une alimentation en matière fibreuse suffisamment dense, sans perte de débit entre la sortie du dispositif de préparation et l'entrée dans la machine d'extrusion. On comprend que, grâce à l'invention, les faisceaux admis dans la machine d'extrusion présentent des longueurs de fibre particulièrement importantes, typiquement la longueur moyenne des fibres naturelles telles que récoltées et initialement conditionnées sous forme de balle de transport : la machine d'extrusion travaille ainsi de longues fibres naturelles, essentiellement sous forme de faisceaux individualisés que le polymère va pouvoir imprégner intimement, tout en garantissant un dosage contrôlé et régulier des fibres naturelles dans le composite, y compris pour des pourcentages élevés en poids de ces fibres naturelles, notamment supérieurs à 15 % du total en poids du composite.

Des caractéristiques additionnelles avantageuses du procédé et de l'installation conforme à l'invention sont spécifiées aux revendications dépendantes.

L'invention sera mieux comprise à la lecture de la description qui va suivre, donnée uniquement à titre d'exemple et faite en se référant aux dessins sur lesquels :
- la figure 1 est un diagramme schématique d'un procédé conforme à l'invention ;
- la figure 2 est un schéma d'une installation de mise en oeuvre du procédé de la figure 1 ;
- la figure 3 est une vue en perspective d'une variante d'un appareil appartenant à l'installation de la figure 2 ;
- les figures 4 et 5 sont des coupes partielles selon respectivement le plan IV de la figure 3 et la ligne V-V de la figure 4 ; et
- la figure 6 est une vue partielle en élévation selon la flèche VI de la figure 4.

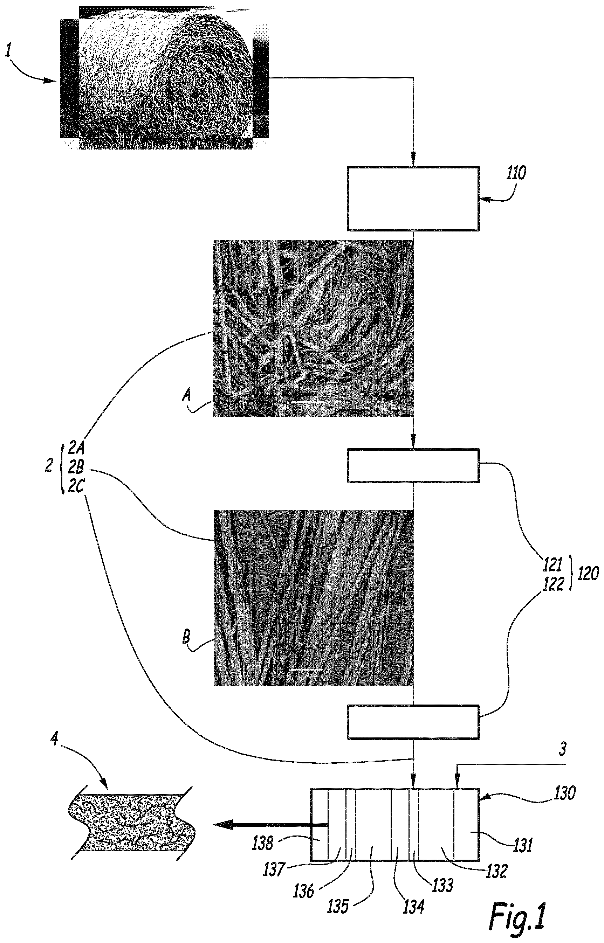

Comme montré sur la figure 1, une balle 1 de fibres naturelles est tout d'abord traitée au cours d'une étape 110 de préparation des fibres naturelles en sortie de laquelle on dispose d'une alimentation en matière fibreuse 2.

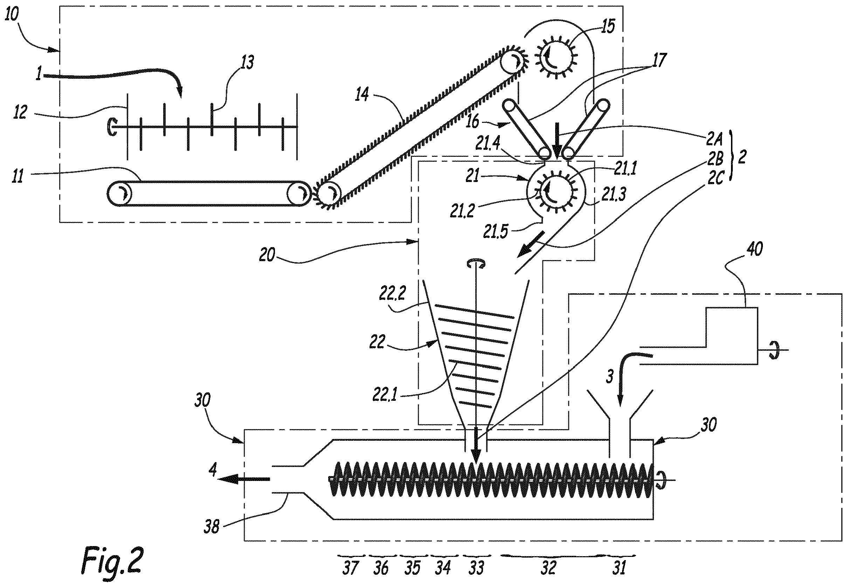

La balle 1 représentée n'est qu'un exemple d'un amas de fibres naturelles, sous la forme duquel ces dernières sont mises à disposition en tant que matière première du procédé et de l'installation conformes à l'invention. En particulier, la forme de cet amas, telle que la balle 1, résulte de la collecte des fibres naturelles et est utilisée pour transportée ces fibres naturelles depuis leur lieu de production jusqu'à l'installation de la figure 2.

A titre d'exemple non limitatif, les fibres naturelles sont des fibres de lin, mises à disposition sous forme d'une balle de plusieurs dizaines de kilogrammes. Plus généralement, les fibres naturelles sont des fibres végétales, notamment lignocellulosiques, allant des fibres de plantes annuelles, telles que le lin, la paille, le chanvre, la bagasse, le miscanthus, le roseau, le rafia, etc.) jusqu'aux fibres de bois.

Dans l'installation de la figure 2, l'étape de préparation 110 est mise en oeuvre en continu par un dispositif correspondant 10 qui, dans l'exemple de réalisation considéré ici, inclut :
- un tapis motorisé à vitesse variable 11 sur lequel débouche une trémie chargeuse 12 pourvue intérieurement de moyens motorisés de dévoutage et d'agitation 13 qui permettent d'ouvrir la balle 1 et de progressivement la réduire en morceaux qui sont entrainés par le tapis 11 ;
- un tapis motorisé alimentateur 14 muni de picots, sur lequel débouche le tapis 11 et qui lui-même débouche sur un rouleau motorisé 15 de renvoi des fibres ; et
- un appareil 16 de dosage des fibres, dans lequel débouche le rouleau précité 15 et qui, dans l'exemple considéré sur la figure 2, et constitué de deux tapis motorisés à vitesse variable 17, agencés de manière convergente l'un vers l'autre en s'éloignant du rouleau 15, de telle sorte que, par compression des fibres entrainées par les tapis 17 en direction opposée au rouleau 15, l'appareil de dosage 16 permet d'obtenir, à sa sortie, l'alimentation en matière fibreuse 2 sous forme d'un tapis continu de fibres et d'en maitriser la vitesse d'avance afin de contrôler en continu le débit de cette alimentation 2.

Bien entendu, les composants 11 à 17 décrits ci-dessus ne sont que des exemples des composants du dispositif de préparation 10, dans le sens où tout ou partie de ces composants peuvent être remplacés par des matériels ayant des fonctions respectives similaires, du moment que, en sortie du dispositif de préparation 10, autrement dit à l'issue de l'étape de préparation 110, la balle de fibres naturelles 1 alimentant ce dispositif soit transformée en l'alimentation en matière fibreuse 2 présentant un débit déterminé, de préférence réglable.

Eu égard à la nature du dispositif de préparation 10, notamment en ce qui concerne sa fonction de dosage des fibres naturelles, on notera que l'alimentation en matière fibreuse 2 issue de l'étape de préparation 110 est constituée de faisceaux de fibre enchevêtrés 2A qui sont montrés sur la photographie A intégrée la figure 1. Cette photographie A montre bien l'enchevêtrement des faisceaux 2A, ainsi que la structure d'ensemble comprimée de ces faisceaux, résultant de l'action de l'appareil de dosage 16. En d'autres termes, l'étape de préparation 110 permet d'extraire, depuis la balle de fibres naturelles 1, les faisceaux enchevêtrés 2A, dont l'enchevêtrement est, d'une part, préexistant dans le sens où il résulte de la forme de balle sous laquelle les fibres naturelles sont mises à disposition et, d'autre part, mis à profit pour contrôler efficacement le débit de l'alimentation en matière fibreuse 2 par l'appareil de dosage 16 ou un appareil similaire.

Comme représenté sur la figure 1, l'étape de préparation 110 est suivie par une étape 120 de traitement de l'alimentation en matière fibreuse 2, qui est mise en oeuvre en continu par un dispositif de traitement correspondant 20. Ce dispositif de traitement 20 reçoit l'alimentation 2 sous la forme des faisceaux enchevêtrés 2A.

Lors d'une première opération 121 de l'étape de traitement 120, les faisceaux enchevêtrés comprimés 2A sont désenchevêtrés pour obtenir ainsi des faisceaux désenchevêtrés aérés 2B, qui sont montrés sur la photographie B intégrée à la figure 1. Dans l'installation de la figure 2, cette opération de désenchevêtrement 121 est mise en oeuvre en continu par des moyens de désenchevêtrement correspondants 21, qui comprennent un rouleau rotatif motorisé 21.1 muni de picots saillants 21.2 sur sa périphérie extérieure. Les moyens de désenchevêtrement 21 comprennent également un carter fixe 21.3, à l'intérieur duquel le rouleau 21.1 est entraîné en rotation, et dont la face intérieure est lisse : ainsi, entre la face extérieure du rouleau 21.1 et la face intérieure du carter 21.3, est délimité un volume libre, typiquement de forme annulaire, dont la dimension transversale correspond sensiblement à la dimension saillante des picots 21.2 et dans lequel les faisceaux enchevêtrés 2A sont introduits, en sortie du dispositif de préparation 10. Dans l'exemple de réalisation considéré sur la figure 2, les faisceaux enchevêtrés 2A tombent par gravité dans le volume libre précité. A cet effet, le carter 21.3 est pourvu d'une lumière 21.4 d'admission des faisceaux enchevêtrés 2A, cette lumière 21.4 étant située à l'extrémité supérieure du carter 21.3 dans la forme de la réalisation de la figure 2. Le carter 21.3 est également pourvu d'une lumière 21.5 d'évacuation des faisceaux désenchevêtrés aérés 2B, typiquement agencée à l'opposé de la lumière d'admission 21.4. Avantageusement, les moyens de désenchevêtrement 21 comprennent également un ou plusieurs racleurs, non représentés sur la figure 2, qui sont agencés fixement à l'intérieur du carter 21.3, de manière à racler la face extérieure du rouleau 21.1, entre les picots 21.2, et ainsi éviter l'accumulation de fibres à l'intérieur du carter.

Bien entendu, la forme de réalisation, décrite ci-dessus, des moyens de désenchevêtrement 21 n'est pas limitative de la présente invention, dans le sens où les composants 21.1 à 21.5 de ces moyens 21 peuvent être en tout ou partie remplacés par des matériels ayant des fonctions respectives similaires à ces composants.

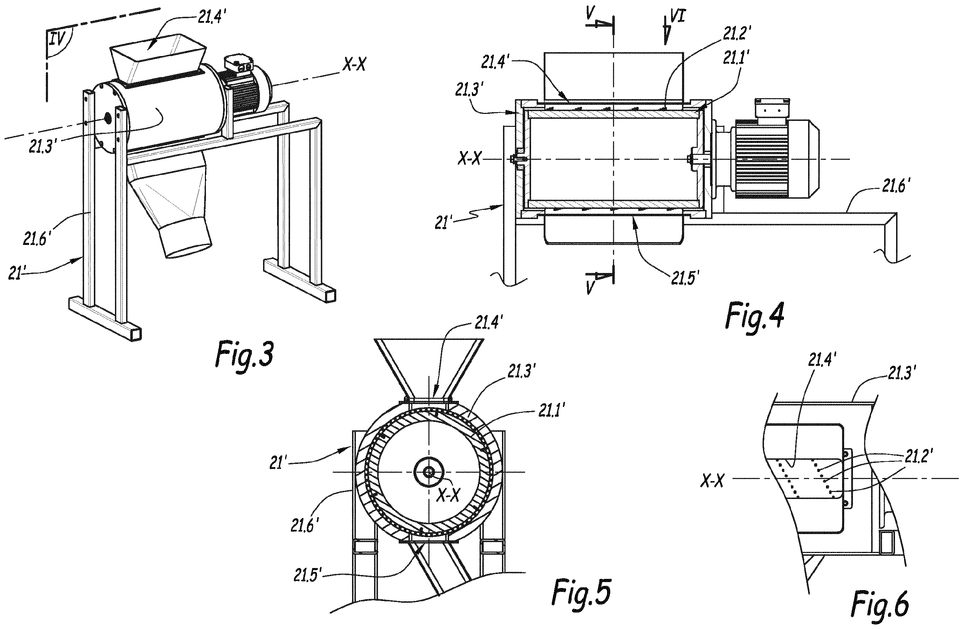

D'ailleurs, une forme de réalisation des moyens de désenchevêtrement précités, plus détaillée que les composants précités 21.1 à 21.5, est représentée sur les figures 3 à 6, sous la forme d'un appareil de désenchevêtrement 21'. Cet appareil 21' comprend un carter fixe 21.3', qui est supporté par un châssis rigide 21.6' et à l'intérieur duquel est agencé un rouleau rotatif 21.1'. Le carter 21.3' et le rouleau 21.1' présentent des formes géométriques respectives de type cylindrique à base circulaire, en étant agencés coaxialement l'un à l'autre, leur axe central étant référencé X-X. Plus spécifiquement, le carter 21.3' présente une face intérieure, qui est cylindrique à base circulaire, centrée sur l'axe X-X, et qui entoure la face extérieure du rouleau 21.1', qui est, elle aussi, cylindrique à base circulaire, centrée sur l'axe X-X. Entre la face extérieure du rouleau 21.1' et la face intérieure du carter 21.3' est délimité un espace libre qui, en coupe transversale à l'axe X-X, comme représenté à la figure 5, présente une section annulaire, cette section annulaire étant constante suivant la direction de l'axe X-X. Comme bien visible sur les figures 4 à 6, la face extérieure du rouleau 21.1' est pourvue de picots 21.2' qui s'étendent chacun en saillie radiale depuis la face extérieure du rouleau 21.1', en étant portés fixement par ce rouleau. A titre d'exemple, chacun des picots 21.2' présente une forme globalement cylindrique à base circulaire, dont l'axe central s'étend radialement à l'axe X-X. Comme bien visible sur les figures 4 et 5, les picots 21.2' sont disposés à l'intérieur du volume libre annulaire précité, étant remarqué que la dimension saillante des picots, autrement dit leur dimension prise suivant leur axe central entre la face extérieure du rouleau 21.1' et leur extrémité libre, correspond sensiblement à la dimension transversale de l'espace libre annulaire précité, c'est-à-dire à la dimension radiale d'une section transversale de cet espace libre. Cela revient à dire que l'extrémité libre de chacun des picots 21.2' est à proximité immédiate de la face intérieure du carter fixe 21.3', avec interposition d'un jeu fonctionnel évitant tout contact direct entre les picots et le carter. En outre, comme bien visible sur les figures 4 et 5, la dimension saillante des picots 21.2' est prévue petite comparativement au diamètre de la face extérieure du rouleau 21.1' : plus précisément, cette dimension saillante des picots est avantageusement inférieure à 5% du diamètre de la face extérieure du rouleau 21.1'.

L'agencement et le dimensionnement des composants, décrits ci-dessus, de l'appareil de désenchevêtrement 21' s'avèrent particulièrement efficaces pour individualiser et aérer les faisceaux de fibre enchevêtrés et comprimés 2A qui sont admis à l'intérieur du volume libre annulaire précité, via une lumière d'admission gravitaire 21.4' délimitée par le carter 21.3'. En effet, les faisceaux enchevêtrés comprimés 2A sont accrochés et entrainés par les picots 21.2' du rouleau 21.1' lorsque ce dernier est entrainé en rotation sur lui-même autour de l'axe X-X, typiquement par un moteur électrique par exemple, avec une vitesse de rotation comprise entre 200 et 1000 tours par minute. La forme annulaire de l'espace libre précité guide efficacement, mais sans les rompre, les faisceaux de fibre à l'intérieur du volume libre précité, depuis la lumière d'admission 21.4' jusqu'à une lumière d'évacuation gravitaire 21.5', délimitée par le carter 21.3' diamétralement à l'opposé de la lumière d'admission 21.4'.

Ainsi, suivant un exemple de réalisation préféré, le diamètre extérieur du rouleau 21.1' est égal à 250 mm, la dimension saillante des picots 21.2' est égale à 6 mm, le jeu entre l'extrémité libre de ces picots et la face intérieure du carter 21.3' est compris entre 0,5 et 1 mm, et le rouleau 21.1' est entrainé à une vitesse de rotation comprise entre 500 et 700 tours par minute.

Avantageusement, comme dans l'exemple de réalisation des figures 3 à 6, les picots 21.2' sont disposés, sur la face extérieure du rouleau 21.1', suivant un motif en hélice centrée sur l'axe X-X, comme bien visible sur la figure 6. Ici, ce motif en hélice s'enroule plusieurs fois autour de la face extérieure du rouleau 21.1', en l'occurrence cinq fois environ. Ce motif en hélice facilite et homogénéise l'introduction des faisceaux 2A à l'intérieur du volume libre annulaire précité, ce qui est avantageux eu égard à la forme d'ensemble en tapis continu de fibres, que présente les faisceaux enchevêtrés comprimés 2A lors de leur admission gravitaire dans la lumière 21.4'.

Ainsi, plus généralement, on comprend que l'opération de désenchevêtrement 121 permet d'agir sur les points d'enchevêtrement, autrement dit les noeuds ou les points d'entremêlement, entre les faisceaux de fibre 2A, de manière à individualiser la majorité de ces faisceaux 2A, c'est-à-dire de manière à, pour plus de la moitié des faisceaux 2A, libérer chacun de ces faisceaux vis-à-vis des autres faisceaux. En considérant globalement l'ensemble des faisceaux enchevêtrés 2A, on peut caractériser l'opération de désenchevêtrement 121 comme permettant de réduire significativement la densité d'enchevêtrement des faisceaux 2A, cette densité correspondant au nombre moyen de points d'enchevêtrement, de noeuds ou de points d'entremêlement entre au moins deux faisceaux 2A, par unité de volume : l'opération de désenchevêtrement 121 divise ainsi par cinq, voire de préférence par vingt cette densité d'enchevêtrement.

On comprend que l'action des moyens de désenchevêtrement 21 ou 21' est de nature mécanique, voire exclusivement de nature mécanique, notamment en excluant tout traitement chimique combiné, par exemple par imprégnation des faisceaux 2A à désenchevêtrer. Dans le prolongement des considérations qui précèdent, on comprend également que l'action des moyens de désenchevêtrement 21 ou 21' induit une forte aération des faisceaux désenchevêtrés 2B, nécessaire à leur bonne individualisation. D'ailleurs, pour bien comprendre cet aspect, la sortie des moyens de désenchevêtrement 21 ou 21', constituée des faisceaux désenchevêtrés 2B, peut être qualifiée de pluie de faisceaux.

En tenant compte de ce qui précède, l'étape de traitement 120 comprend, à la suite de l'opération de désenchevêtrement 121, une opération de densification 122 visant à désaérer les faisceaux désenchevêtrés 2B et produire ainsi des faisceaux désenchevêtrés densifiés 2C.

Au sein de l'installation de la figure 2, cette opération de densification 122 est mise en oeuvre en continu par des moyens correspondants 22 qui comprennent une vis motrice tronconique 22.1 montée à rotation sur elle-même dans un carter tronconique complémentaire 22.2. L'extrémité de plus grand diamètre de la vis 22.1 est alimentée par les faisceaux désenchevêtrés aérés 2B sortant des moyens de désenchevêtrement 21. Au fur et à mesure de leur progression dans le carter 22.2 sous l'action d'entraînement de la vis 22.1, les faisceaux désenchevêtrés sont densifiés, avantageusement sans autre mouvement parasite. Cette densification résulte directement de la géométrie tronconique de la vis 22.1 dont le volume libre de fond de filet se réduit progressivement en direction de son extrémité de plus petit diamètre.

Bien entendu, les composants des moyens de densification 22, décrits ci-dessus, ne sont pas limitatifs de la présente invention, tout ou partie de ces composants pouvant être remplacés par des matériels ayant des fonctions similaires. Plus généralement, on comprend que ces moyens de densification 22 agissent de manière mécanique, de préférence exclusivement de manière mécanique, pour modifier l'arrangement relatif des faisceaux désenchevêtrés aérés 2B de façon à réduire le volume libre entre ces faisceaux, et ceux d'un facteur cinq, voire de préférence d'un facteur vingt.

Avant de passer à la description de l'étape subséquente à l'étape de traitement 120, on notera que cette étape 120 est mise en oeuvre sur l'alimentation en matière fibreuse 2 sans modification du débit de cette alimentation, fixée à l'étape de préparation 110, comme expliqué plus haut, en particulier sous l'action de l'appareil de dosage 16. Autrement dit, le dispositif de traitement 20 ne modifie pas le débit, massique ou volumétrique, de l'alimentation en matière fibreuse 2 par unité de temps, mais, comme expliqué en détail ci-dessus, en change l'arrangement des faisceaux, en passant des faisceaux enchevêtrés 2A aux faisceaux désenchevêtrés aérés 2B puis aux faisceaux désenchevêtrés densifiés 2C.

L'étape de traitement 120 est suivie d'une étape 130 de production d'un composite incluant les fibres naturelles de l'alimentation 2 et un polymère provenant d'une alimentation correspondante 3. Le produit composite obtenu à l'issu de cette étape de production 130 est référencé 4.

L'étape de production 130 est mise en oeuvre par une machine d'extrusion 30. A titre préférentiel, cette machine d'extrusion 30 est un extrudeur bivis corotatif.

La machine d'extrusion 30 inclut une succession de zones de travail, qui vont être détaillées ci-après et qui sont traversées les unes à la suite des autres par la ou les vis centrales de la machine, ce ou ces vis assurant la circulation de matière à l'intérieur de chaque zone, ainsi que d'une zone à une autre.

La machine d'extrusion 30 inclut, à l'opposé de sa sortie en produit composite 4, une zone 31 d'introduction de l'alimentation en polymère 3, zone dans laquelle est mise en oeuvre une opération correspondante 131. En pratique, comme représenté à la figure 2, l'alimentation en polymère 3 est avantageusement fournie par un dispositif 40 de préparation du polymère, permettant, entre autres, de doser ce polymère, autrement dit de contrôler le débit de l'alimentation 3. Le dispositif 40 est connu en soi et ne sera pas décrit ici plus avant.

La machine d'extrusion 30 inclut également une zone 32 de fusion du polymère, qui est située immédiatement en aval de la zone d'introduction 31 et dans laquelle est mise en oeuvre une opération 132 de fusion du polymère provenant de la zone d'introduction 31.

La machine d'extrusion 30 inclut en outre une zone 33 d'introduction de l'alimentation en matière fibreuse 2, qui est située en aval de la zone de fusion 32 et dans laquelle est mise en oeuvre une opération d'introduction correspondante 133 selon laquelle les faisceaux désenchevêtrés densifiés 2C, sortant du dispositif de traitement 20, sont introduits dans la machine d'extrusion 30, plus précisément jusqu'à la ou les vis centrales de cette machine. Dans l'exemple de réalisation considéré à la figure 2, l'extrémité de plus petit diamètre de la vis 22.1 pousse directement les faisceaux 2C à l'intérieur de la machine d'extrusion 30.

La machine d'extrusion 30 inclut également une zone 34 d'éclatement des faisceaux de fibre, qui est située immédiatement en aval de la zone d'introduction 33 et dans laquelle est mise en oeuvre une opération d'éclatement correspondante 134. Cette opération d'éclatement 134 permet de travailler mécaniquement les faisceaux 2C pour libérer les fibres élémentaires dont sont constitués ces faisceaux. Ce travail d'éclatement des faisceaux est produit par la ou les vis centrales de la machine d'extrusion 30, notamment par une composition de vis spécifiquement adaptée à cette fin, et ce avantageusement sans traitement chimique préalable des faisceaux 2C.

Avantageusement, on notera que l'éclatement des faisceaux 2C par la zone 34 de la machine d'extrusion 30 peut avoir été commencé lors de l'étape de traitement 120, plus précisément lors de l'opération de désenchevêtrement 121 : en effet, sous l'action des moyens de désenchevêtrement 21 ou 21', certains des faisceaux désenchevêtrés aérés 2B peuvent commencer leur éclatement en fibres élémentaires, ce qui peut d'ailleurs être observé sur la photographie B. Ainsi, le début d'éclatement, réalisé par les moyens de désenchevêtrement 21 ou 21', est poursuivi et finalisé par la zone 34 de la machine d'extrusion 30.

La machine d'extrusion 30 inclut également une zone 35 de mélange des fibres élémentaires, obtenus en sortie de la zone d'éclatement 34, avec le polymère fondu, obtenu en sortie de la zone de fusion 132. Dans cette zone de mélange 35 est ainsi mise en oeuvre une opération de mélange correspondante 135 : la ou les vis centrales de la machine d'extrusion 30 imprègnent de polymère les fibres élémentaires éclatées des faisceaux 2C de façon très fine, notamment sans provoquer de réagglomération des fibres élémentaires en cours de mélange, ni réduire significativement la longueur de ces fibres, c'est-à-dire la longueur des faisceaux 2C obtenus à l'issue de l'étape de traitement 120.

Avantageusement, la zone de mélange 135 est équipée d'un profil de vis peu générateur de contrainte mécanique, adapté au fait que l'on cherche à conserver aux fibres élémentaires leur longueur maximale au cours de leur mélange intime avec le polymère.

On notera que la présence combinée, au sein de la machine d'extrusion 30, des zones 134 et 135 décrites ci-dessus présente un intérêt technique indépendamment du reste de l'installation, notamment de la présence du dispositif 20. Autrement dit, la mise en oeuvre successive des étapes 134 et 135 par la machine d'extrusion peut avantageusement être envisagée indépendamment des étapes 110 et 120, par exemple en l'absence tout ou partie de l'étape 120 et/ou de l'étape 110.

La machine d'extrusion 30 inclut en outre une zone 36 de dégazage sous vide, située immédiatement en aval de la zone de mélange 35 et dans laquelle est mise en oeuvre une opération correspondante 136 permettant de retirer une partie de l'humidité provenant des fibres naturelles.

Enfin, la machine d'extrusion 30 inclut une zone 37 de montée en pression, située immédiatement en aval de la zone de dégazage sous vide 35 et dans laquelle est mise en oeuvre une opération correspondante 137 permettant d'augmenter la pression du mélange entre le polymère et les fibres naturelles.

A sa sortie, la machine d'extrusion 30 est pourvue d'une filière 38, qui est située immédiatement en aval de la zone 37 et qui permet de mettre en oeuvre une opération 138 de mise en forme du produit composite 4.

En pratique, le mélange composite obtenu 4 présente avantageusement un pourcentage de fibres naturelles supérieur à 15 % du total en poids, étant remarqué que les teneurs respectives en fibres naturelles et en polymère sont directement liées aux débits respectifs de l'alimentation en matière fibreuse 2 et de l'alimentation en polymère 3.

A titre optionnel non représenté, la machine d'extrusion 30 est associée à des dispositifs aval permettant de traiter le produit composite extrudé 4 et réaliser ainsi un produit final. En particulier, un dispositif de refroidissement, puis un dispositif de granulation ou de coupe complètent ainsi la machine d'extrusion 30, pour réaliser un produit final sous forme de granulés à partir du produit composite extrudé 4 sortant de la filière 38.

Grâce au dispositif de traitement 20, la machine d'extrusion 30 reçoit l'alimentation en matière fibreuse 2 de manière homogène dans la structure de cette alimentation et de manière régulière dans le temps, contrairement à l'introduction non régulière et saccadée qui serait réalisée en envoyant les faisceaux enchevêtrés 2A de l'alimentation 2 directement dans la zone 33 de la machine d'extrusion 30. Autrement dit, les faisceaux désenchevêtrés densifiés 2C, qui constituent l'alimentation en matière fibreuse 2 lors de son introduction dans la machine d'extrusion 30, permettent une admission de fibres naturelles stable dans la machine d'extrusion 30, garantissant le bon déroulement des opérations mises en oeuvres par cette machine après l'opération d'introduction 133, en particulier les opérations d'éclatement 134 et de mélange 135.

A titre d'exemple, le procédé et l'installation décrits ci-dessus ont été mis en oeuvre avec des fibres naturelles de lin, les photographies A et B ayant d'ailleurs été réalisées dans le cadre de cet exemple de mise en oeuvre. Les faisceaux de lin présentent un diamètre compris entre 50 et 400 micromètres tandis que leurs fibres élémentaires présentent un diamètre compris entre 10 et 20 micromètres.

## Revendications

1. Procédé de fabrication en continu d'un composite (4) incluant une matrice en un polymère et des fibres naturelles, ce procédé incluant successivement :
- une étape (110) de préparation des fibres naturelles, dans laquelle des faisceaux enchevêtrés sont extraits d'un amas de fibres naturelles en vrac (1), tel qu'une balle, puis sont dosés par compression pour obtenir une alimentation en matière fibreuse (2) sous forme de faisceaux enchevêtrés comprimés (2A), qui présente un débit déterminé,
- une étape (120) de traitement de l'alimentation en matière fibreuse (2), dans laquelle les faisceaux enchevêtrés comprimés (2A) de l'alimentation en matière fibreuse (2) sont, à débit de cette alimentation sensiblement constant, mécaniquement traités successivement par
- une opération de désenchevêtrement (121), lors de laquelle les faisceaux enchevêtrés comprimés (2A) sont, par gravité, admis dans un volume libre à l'intérieur duquel ils sont soumis à une action mécanique d'individualisation et d'aération de manière à obtenir des faisceaux désenchevêtrés aérés (2B), et
- une opération de densification (122), lors de laquelle les faisceaux désenchevêtrés aérés (2B) sont désaérés pour produire des faisceaux désenchevêtrés densifiés (2C), et
- une étape (130) de production du composite (4), dans laquelle les faisceaux désenchevêtrés densifiés (2C) et le polymère (3) sont introduits dans une machine d'extrusion (30) et y sont mélangés de manière à, en sortie de la machine d'extrusion, obtenir le composite (4).

2. Procédé suivant la revendication 1, **caractérisé en ce que** le polymère (3) est un biopolymère.

3. Procédé suivant l'une des revendications 1 ou 2, **caractérisé en ce que** la teneur en fibres naturelles est supérieure à 15% en poids du composite (4).

4. Procédé suivant l'une quelconque des revendications précédentes, **caractérisé en ce que** les opérations de désenchevêtrement (121) et de densification (122) sont exclusivement de nature mécanique.

5. Procédé suivant selon l'une quelconque des revendications précédentes, **caractérisé en ce que** l'opération de désenchevêtrement (121) divise par cinq, voire par vingt, la densité d'enchevêtrement des faisceaux (2A) de l'alimentation en matière fibreuse (2).

6. Procédé suivant l'une quelconque des revendications précédentes, **caractérisé en ce que** l'opération de désenchevêtrement (121) est mise en oeuvre par individualisation de la majorité des faisceaux (2A) de l'alimentation en matière fibreuse (2).

7. Procédé suivant l'une quelconque des revendications précédentes, **caractérisé en ce que**, lors de l'opération de désenchevêtrement (121), au moins certains des faisceaux (2A) de l'alimentation en matière fibreuse (2) sont en outre au moins partiellement éclatés en fibres élémentaires.

8. Procédé suivant l'une quelconque des revendications précédentes, **caractérisé en ce que** ledit volume libre est délimité entre la face intérieure d'un carter (21.3') fixe et la face extérieure d'un rouleau (21.1') qui est entraîné en rotation sur lui-même à l'intérieur du carter à une vitesse comprise entre 200 et 1000 tours par minute, de préférence entre 500 et 700 tours par minute, laquelle face extérieure du rouleau est pourvue de picots saillants (21.2') dont la dimension en saillie correspond sensiblement à la dimension transversale dudit espace libre et représente moins de 5% du diamètre extérieur du rouleau.

9. Procédé suivant l'une quelconque des revendications précédentes, **caractérisé en ce que**, lors de l'opération de densification (122), les faisceaux (2B) issus de l'opération de désenchevêtrement (121) sont réarrangés les uns par rapport aux autres de manière à réduire le volume libre entre eux, notamment d'un facteur cinq, voire d'un facteur vingt.

10. Procédé suivant l'une quelconque des revendications précédentes, **caractérisé en ce que** l'étape de production (130) inclut :
- une opération d'éclatement (134) dans laquelle les faisceaux désenchevêtrés densifiés (2C) sont éclatés en fibres élémentaires par la machine d'extrusion (30), et
- une opération de mélange (135), qui est mise en oeuvre dans une zone (35) de la machine d'extrusion (30) située en aval de la zone (34) dans laquelle est mise en oeuvre l'opération d'éclatement (134), et dans laquelle les fibres élémentaires et le polymère (3) sont mélangés par la machine d'extrusion.

11. Installation de fabrication en continu d'un composite (4) incluant une matrice en un polymère et des fibres naturelles, cette installation comprenant :
- un dispositif (10) de préparation des fibres naturelles, qui inclut des moyens (11, 12, 13, 14, 15) pour extraire des faisceaux enchevêtrés (2A) depuis un amas de fibres naturelles en vrac (1), tel qu'une balle, ainsi que des moyens (16, 17) pour doser par compression les faisceaux enchevêtrés et obtenir ainsi une alimentation en matière fibreuse (2) sous forme de faisceaux enchevêtrés comprimés (2A) et présentant un débit déterminé,
- un dispositif (20) de traitement des faisceaux enchevêtrés comprimés (2A) de l'alimentation en matière fibreuse (2), qui est adapté pour, à débit sensiblement constant de l'alimentation en matière fibreuse, traiter mécaniquement ces faisceaux par des moyens mécaniques de désenchevêtrement (21 ; 21') puis des moyens mécaniques de densification (22), lesquels moyens de désenchevêtrement (21 ; 21') définissent un volume libre dans lequel les faisceaux enchevêtrés comprimés (2A) sont admis par gravité et sont adaptés pour, à l'intérieur de ce volume libre, individualiser et aérer les faisceaux enchevêtrés comprimés afin d'obtenir des faisceaux désenchevêtrés aérés (2B), et lesquels moyens de densification (22) sont adaptés pour désaérer les faisceaux désenchevêtrés aérés (2B) afin d'obtenir des faisceaux désenchevêtrés densifiés (2C), et
- une machine d'extrusion (30) qui inclut, à la fois, une zone (31) d'introduction du polymère (3), une zone (33) d'introduction des faisceaux désenchevêtrés densifiés (2C), et un zone (35) de mélange entre le polymère et les faisceaux désenchevêtrés densifiés pour former le composite (4).

12. Installation suivant la revendication 11, **caractérisée en ce que** les moyens de désenchevêtrement (21 ; 21') comprennent un rouleau rotatif (21.1 ; 21.1'), dont la face extérieure est pourvue de picots saillants (21.2 ; 21.2') d'individualisation des faisceaux enchevêtrés comprimés (2A), ainsi qu'un carter fixe (21.3 ; 21.3'), à l'intérieur duquel le rouleau (21.1 ; 21.1') est entraîné en rotation, ledit volume libre étant délimité entre la face extérieure du rouleau et la face intérieure du carter et présentant une dimension transversale qui correspond sensiblement à la dimension saillante des picots.

13. Installation suivant la revendication 12, **caractérisée en ce que** la dimension saillante des picots (21.2') est inférieure à 5% du diamètre extérieur du rouleau (21.1').

14. Installation suivant l'une des revendications 12 ou 13, **caractérisée en ce qu'**au moins certains des picots (21.2') sont répartis sur la face extérieure du rouleau (21.1') suivant un motif en hélice coaxiale au rouleau.

15. Installation suivant l'une des revendications 11 à 14, **caractérisée en ce que** la machine d'extrusion (30) inclut en outre une zone (34) d'éclatement en fibres élémentaires des faisceaux de l'alimentation de matière fibreuse (2), cette zone d'éclatement étant agencée en aval de la zone (33) d'introduction de l'alimentation en matière fibreuse et en amont de la zone de mélange (35).

## Patentansprüche

1. Verfahren zur kontinuierlichen Herstellung eines Verbundstoffs (4) mit einer Polymer-Matrix und Naturfasern, wobei das Verfahren die folgenden aufeinanderfolgenden Schritte umfasst:
- einen Schritt (110) der Vorbereitung der Naturfasern, wobei miteinander verworrene Faserbündel aus einer losen Anhäufung von Naturfasern (1), wie zum Beispiel einem Ballen, extrahiert werden, anschließend durch Kompression dosiert werden, um eine Zufuhr von faserigem Material (2) in Form miteinander verworrener komprimierter Faserbündel (2A) mit einer festgelegten Durchflussmenge zu erhalten,
- einen Schritt (120) der Behandlung der zugeführten Menge von faserigem Material (2), wobei die miteinander verworrenen komprimierten Faserbündel (2A) aus der zugeführten Menge von faserigem Material (2) bei der Zufuhr mit im Wesentlichen konstanter Durchflussmenge sukzessive mechanisch behandelt werden durch:
- einen Entwirrungsvorgang (121), bei dem die miteinander verworrenen komprimierten Faserbündel (2A) aufgrund der Schwerkraft in ein freies Volumen aufgenommen werden, in welchem sie einer mechanischen Einwirkung zur Individualisierung und Belüftung unterzogen werden, um entworrene belüftete Faserbündel (2B) zu erhalten, und
- einen Verdichtungsvorgang (122), bei dem die entworrenen belüfteten Faserbündel (2B) entlüftet werden, um entworrene verdichtete Faserbündel (2C) zu erzeugen, und
- einen Schritt (130) der Herstellung des Verbundstoffs (4), wobei die entworrenen verdichteten Faserbündel (2C) und das Polymer (3) in eine Extrusionsmaschine (30) eingeführt und dort vermischt werden, sodass der Verbundstoff (4) am Auslass der Extrusionsmaschine erhalten wird.

2. Verfahren nach Anspruch 1, **dadurch gekennzeichnet, dass** das Polymer (3) ein Biopolymer ist.

3. Verfahren nach einem der Ansprüche 1 oder 2, **dadurch gekennzeichnet, dass** der Gehalt an Naturfasern größer ist als 15 Gew.-% des Verbundstoffs (4).

4. Verfahren nach einem der vorhergehenden Ansprüche, **dadurch gekennzeichnet, dass** der Entwirrungsvorgang (121) und der Verdichtungsvorgang (122) ausschließlich mechanischer Art sind.

5. Verfahren nach einem der vorhergehenden Ansprüche, **dadurch gekennzeichnet, dass** der Entwirrungsvorgang (121) die Verwirrungsdichte der Faserbündel (2A) aus der zugeführten Menge von faserigem Material (2) durch fünf oder sogar durch 20 teilt.

6. Verfahren nach einem der vorhergehenden Ansprüche, **dadurch gekennzeichnet, dass** der Entwirrungsvorgang (121) durch Individualisierung der Mehrzahl der Faserbündel (2A) aus der zugeführten Menge von faserigem Material durchgeführt wird.

7. Verfahren nach einem der vorhergehenden Ansprüche, **dadurch gekennzeichnet, dass** bei dem Entwirrungsvorgang (121) zumindest einige der Faserbündel (2A) aus der zugeführten Menge von faserigem Material (2) des Weiteren zumindest teilweise in Faserelemente aufgebrochen werden.

8. Verfahren nach einem der vorhergehenden Ansprüche, **dadurch gekennzeichnet, dass** das freie Volumen von der inneren Fläche eines festen Gehäuses (21.3') und der äußeren Fläche einer Rolle (21.1') begrenzt ist, wobei die Rolle in dem Inneren des Gehäuses mit einer Geschwindigkeit von 200 bis 1000 Umdrehungen pro Minute, bevorzugt von 500 bis 700 Umdrehungen pro Minute, um sich selbst drehend angetrieben wird, wobei die äußere Fläche der Rolle mit hervorstehenden Stiften (21.2') versehen ist, deren Überstandsabmessung im Wesentlichen mit der Querabmessung des freien Raumes übereinstimmt und weniger als 5 % des äußeren Durchmessers der Rolle beträgt.

9. Verfahren nach einer der vorhergehenden Ansprüche, **dadurch gekennzeichnet, dass** die aus dem Entwirrungsvorgang (121) hervorgegangenen Faserbündel (2B) bei dem Verdichtungsvorgang (122) relativ zueinander umgruppiert werden, um auf diese Art und Weise das freie Volumen zwischen ihnen zu reduzieren, insbesondere um den Faktor fünf oder sogar um den Faktor 20.

10. Verfahren nach einem der vorhergehenden Ansprüche, **dadurch gekennzeichnet, dass** der Herstellungsschritt (130) Folgendes umfasst:
- einen Aufbrechungsvorgang (134), in welchem die entworrenen verdichteten Faserbündel (2C) durch die Extrusionsmaschine (30) in Faserelemente aufgebrochen werden, und
- einen Vermischungsvorgang (135), der in einem Bereich (35) der Extrusionsmaschine (30) durchgeführt wird, welcher dem Bereich (34), in welchem der Aufbrechungsvorgang (134) durchgeführt wird, nachgeschaltet ist, und bei welchem die Faserelemente und das Polymer (3) durch die Extrusionsmaschine vermischt werden.

11. Anlage zur kontinuierlichen Herstellung eines Verbundstoffs (4) mit einer Polymer-Matrix und Naturfasern, wobei die Anlage Folgendes umfasst:
- eine Vorrichtung (10) zur Herstellung der Naturfasern, welche Extraktionsmittel (11, 12, 13, 14, 15) umfasst, um miteinander verworrene Faserbündel (2A) aus einer losen Ansammlung (1) von Naturfasern, wie zum Beispiel einem Ballen, zu extrahieren, sowie Dosierungsmittel (16, 17), um die miteinander verworrenen Faserbündel durch Kompression zu dosieren und somit eine Zufuhr von faserigem Material (2) in Form von miteinander verworrenen komprimierten Faserbündeln (2A) mit einer festgelegten Durchflussmenge zu erhalten,
- eine Vorrichtung (20) zur Behandlung der miteinander verworrenen komprimierten Faserbündel (2A) aus der zugeführten Menge von faserigem Material (2), welche bei im Wesentlichen konstanter Durchflussmenge angepasst ist, um die Faserbündel zunächst durch mechanische Entwirrungsmittel (21; 21') und anschließend durch mechanische Verdichtungsmittel (22) mechanisch zu behandeln, wobei die Entwirrungsmittel (21; 21') ein freies Volumen definieren, in welchem die miteinander verworrenen komprimierten Faserbündel (2A) aufgrund der Schwerkraft aufgenommen werden und angepasst werden, um in dem Inneren des freien Volumens die miteinander verworrenen komprimierten Faserbündel zu individualisieren und zu belüften, um entworrene belüftete Faserbündel (2B) zu erhalten, und wobei die Verdichtungsmittel (22) angepasst sind, um die entworrenen belüfteten Faserbündel (2B) zu entlüften, um entworrene verdichtete Faserbündel (2C) zu erhalten, und
- eine Extrusionsmaschine (30), die gleichzeitig einen Bereich (31) zur Einführung des Polymers (3), einen Bereich (33) zur Einführung der entworrenen verdichteten Faserbündel (2C) und einen Bereich (35) zur Vermischung des Polymers und der entworrenen verdichteten Faserbündel umfasst, um den Verbundstoff (4) auszubilden.

12. Anlage nach Anspruch 11, **dadurch gekennzeichnet, dass** die Entwirrungsmittel (21; 21') eine drehbare Rolle aufweisen, deren äußere Fläche mit hervorstehenden Stiften (21.2; 21.2') zur Individualisierung der miteinander verworrenen komprimierten Faserbündel (2A) versehen ist, ebenso wie ein festes Gehäuse (21.3; 21.3'), in dessen Innerem die Rolle (21.1; 21.1') drehend angetrieben wird, wobei das freie Volumen von der äußeren Fläche der Rolle und der inneren Fläche des Gehäuses begrenzt ist und eine Querabmessung aufweist, welche im Wesentlichen mit der Abmessung des Überstands der hervorstehenden Stifte übereinstimmt.

13. Anlage nach Anspruch 12, **dadurch gekennzeichnet, dass** die Abmessung des Überstands der hervorstehenden Stifte (21.2') weniger als 5% des äußeren Durchmessers der Rolle (21.1') beträgt.

14. Anlage nach einem der Ansprüche 12 oder 13, **dadurch gekennzeichnet, dass** mindestens einige der Stifte (21.2') auf der äußeren Seite der Rolle (21.1') entsprechend dem Muster einer Koaxialschraube an der Rolle verteilt sind.

15. Anlage nach einem der Ansprüche 11 bis 14, **dadurch gekennzeichnet, dass** die Extrusionsmaschine (30) des Weiteren einen Aufbrechungsbereich (34) umfasst, in welchem die Faserbündel aus der zugeführten Menge von faserigem Material (2) in Faserelemente aufgebrochen werden und welcher dem Bereich (33) zur Zufuhr von faserigern Material nachgeschaltet und dem Vermischungsbereich (35) vorgeschaltet ist.

## Claims

1. Process for the continuous manufacture of a composite (4) including a matrix of a polymer and natural fibres, this process including, successively:
- a step (110) of preparation of the natural fibres, wherein bundles of entangled fibres are extracted from a cluster of loose natural fibres (1) such as a bale, then are metered by compression in order to obtain a supply of fibrous material (2) in the form of compressed entangled bundles (2A), which supply has a determined flow rate,
- a step (120) of treatment of the supply of fibrous material (2), wherein, at a substantially constant rate of this supply, the compressed entangled bundles (2A) of the supply of fibrous material (2) are mechanically treated successively by:
- a disentangling operation (121), during which the compressed entangled bundles (2A) are admitted into a free space by gravity, within which they are subjected to a mechanical action of separation and aeration so as to obtain aerated disentangled bundles (2B), and
- a densification operation (122), during which the aerated disentangled bundles (2B) are deaerated in order to produce densified disentangled bundles (2C), and
- a step (130) of production of the composite (4), wherein the densified disentangled bundles (2C) and the polymer (3) are introduced into an extrusion machine (30) and are mixed therein so as to obtain the composite (4) at the outlet of the extrusion machine.

2. Process according to Claim 1, **characterized in that** the polymer (3) is a biopolymer.

3. Process according to either of Claims 1 and 2, **characterized in that** the content of natural fibres is greater than 15% by weight of the composite (4).

4. Process according to any one of the preceding claims, **characterized in that** the operations of disentangling (121) and densification (122) are exclusively mechanical in nature.

5. Process according to any one of the preceding claims, **characterized in that** the disentangling operation (121) divides by five, or even by twenty, the density of entanglement of the bundles (2A) of the supply of fibrous material (2).

6. Process according to any one of the preceding claims, **characterized in that** the disentangling operation (121) is carried out by separating the majority of the bundles (2A) of the supply of fibrous material (2).

7. Process according to any one of the preceding claims, **characterized in that**, during the disentangling operation (121), at least some of the bundles (2A) of the supply of fibrous material (2) are also at least partially divided up into individual fibres.

8. Process according to any one of the preceding claims, **characterized in that** said free space is delimited between the inner face of a fixed casing (21.3') and the outer face of a roller (21.1') which is driven in rotation about itself inside the casing at a speed of between 200 and 1000 revolutions per minute, preferably between 500 and 700 revolutions per minute, which outer face of the roller is provided with projecting spikes (21.2'), the dimension in projection of which corresponds substantially to the transverse dimension of the free space and represents less than 5% of the outer diameter of the roller.

9. Process according to any one of the preceding claims, **characterized in that**, during the densification operation (122), the bundles (2B) resulting from the disentangling operation (121) are rearranged with respect to one another so as to reduce the free space between them, especially by a factor of five, or even by a factor of twenty.

10. Process according to any one of the preceding claims, **characterized in that** the production step (130) includes:
- a dividing operation (134) in which the densified disentangled bundles (2C) are divided up into individual fibres by the extrusion machine (30), and
- a mixing operation (135) which is carried out in a region (35) of the extrusion machine (30) located downstream of the region (34) in which the dividing operation (134) is carried out, and in which the individual fibres and the polymer (3) are mixed by the extrusion machine.

11. Facility for the continuous manufacture of a composite (4) including a matrix of a polymer and natural fibres, this facility including:
- a device (10) for the preparation of the natural fibres, which includes means (11, 12, 13, 14, 15) for extracting entangled bundles (2A) from a cluster of loose natural fibres (1) such as a bale, and also means (16, 17) for metering the entangled bundles by compression and thereby obtaining a supply of fibrous material (2) in the form of compressed entangled bundles (2A), which supply has a determined flow rate,
- a device (20) for the treatment of the compressed entangled bundles (2A) of the supply of fibrous material (2), which, at a substantially constant flow rate of the supply of fibrous material, is suitable for mechanically treating these bundles by mechanical disentangling means (21; 21'), then mechanical densification means (22), which disentangling means (21; 21') define a free space into which the compressed entangled bundles (2A) are admitted by gravity and, within this free space, are suitable for separating and aerating the compressed entangled bundles so as to obtain aerated disentangled bundles (2B), and which densification means (22) are suitable for deaerating the aerated disentangled bundles (2B) in order to obtain densified disentangled bundles (2C), and
- an extrusion machine (30) which includes a region (31) for introduction of the polymer (3), a region (33) for introduction of the densified disentangled bundles (2C) and a region (35) for mixing the polymer and the densified disentangled bundles in order to form the composite (4).

12. Facility according to Claim 11, **characterized in that** the disentangling means (21; 21') comprise a rotary roller (21.1; 21.1'), the outer face of which is provided with projecting spikes (21.2; 21.2') for separating the compressed entangled bundles (2A) and also a fixed casing (21.3; 21.3'), inside which the roller (21.1; 21.1') is driven in rotation, said free space being delimited between the outer face of the roller and the inner face of the casing and having a transverse dimension which corresponds substantially to the projecting dimension of the spikes.

13. Facility according to Claim 12, **characterized in that** the projecting dimension of the spikes (21.2') is less than 5% of the outer diameter of the roller (21.1').

14. Facility according to either of Claims 12 and 13, **characterized in that** at least some of the spikes (21.2') are distributed on the outer face of the roller (21.1') in a helical pattern coaxial to the roller.

15. Facility according to one of Claims 11 to 14, **characterized in that** the extrusion machine (30) also includes a region (34) for dividing the bundles of the supply of fibrous material (2) into individual fibres, this dividing region being arranged downstream of the region (33) for introduction of the supply of fibrous material and upstream of the mixing region (35).
